(19)

Europäisches
Patentamt
European
Patent Office
Office européen
des brevets

(11) **EP 1 808 327 A1**

(12) **EUROPEAN PATENT APPLICATION**

(43) Date of publication:
**18.07.2007 Bulletin 2007/29**

(51) Int Cl.:
***B60L 11/18*** (2006.01)     ***H01M 8/06*** (2006.01)

(21) Application number: **06425015.2**

(22) Date of filing: **13.01.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **Rossi, Claudio**
**53100 Siena (IT)**

(72) Inventors:
 • **Macchia, Andrea**
  **Colle di Val d'Elsa (SI) (IT)**
 • **Rossi, Claudio**
  **53100 Siena (IT)**
 • **Ristori, Sandra**
  **50122 Firenze (IT)**
 • **Magnani, Agnese**
  **53010 S. Rocco a Pilli-Siena (IT)**

(54) **Electric energy production through fuel cells fed by hydrogen obtained from ethanol catalytic reforming**

(57)     The proposed process makes use of a raw material (ethanol), which is commonly obtained from totally renewable sources (cereals, sugar cane, molasses etc) and, in the future, from poor biomasses (wood and cellulose wastes), obtaining electric power without producing $CO_2$ nor generate additional polluting agents.

The raw material is transformed by means of a catalytic reformer into a hydrogen cointaining gas mixture which is purified in a successive step. The hydrogen-enriched gas is fed to a fuel cell driven device such as a vehicle, marine vehicle, spacecraft or for household purposes.

EP 1 808 327 A1

Printed by Jouve, 75001 PARIS (FR)

## Description

## Introduction

The use of fuel cells for electric energy production is quickly becoming a reality. Most of the major world vehicle manufacturers have built cars or buses with electric engines utilising energy obtained from the oxidation of hydrogen. The evolution and availability of such vehicles, and their use in resolving the $CO_2$ generation problem, is limited by the danger and size of the high pressure storage tanks. An additional problem comes from the difficulty in creating an efficient hydrogen supply network.

We intend to patent an approach, both original and industrially feasible, of producing hydrogen on board by means of a portable energy generator. The purity of the hydrogen, produced from ethanol through catalytic reforming in the presence of water and oxygen, will be high enough to ensure continuous fuel cell operation.

The advantages of such a system are evident, in particular for reducing the danger related to utilising ethanol (which has a ignition point lower than gasoline) rather than hydrogen. Moreover, vehicle fueling can be performed by exploiting the existing network and the general costs would be comparable to the present cost of petrol. A major benefit in our approach is also related to the ethanol production strategy, that being linked to the use of purely renewable sources.

In such a manner, the $CO_2$ produced in the ethanol reforming process does not contribute to the greenhouse effect.

The $CO_2$ produced corresponds exactly to the amount of $CO_2$ retained in biomass by the source vegetation within its growth cycle, and converted through fermentation and distillation into ethanol.

The photosynthetic reaction, which utlises solar energy to transform $CO_2$ and $H_2O$ into carbohydrates is described below:

$$6 \ CO_2 + 6 \ H_2O \rightarrow C_6H_{12}O_6 + 6O_2$$

The subsequent transformation of carbohydrates in ethanol is described by the Gay-Lussac fundamental equation:

$$C_6H_{12}O_6 \rightarrow 2 \ C_2H_5OH + 2CO_2 + Q$$

There is a clear universally accepted balance between the amount of carbon dioxide retained during the photosynthesis process and the total carbon dioxide released in the atmosphere during hydrogen production from ethanol.

## Process diagramme

The hydrogen production process starting from ethanolisscematically represented below:

**Ethanol
@ 94,2 % - 100 %**

Release to atmosphere

Pre-heating ← Combustion

Oxygen → **Catalytic Reforming**

Hydrogen + carbon dioxide
+ carbon mono-oxide

**Hydrogen purification** → carbon dioxide
carbon mono-

oxide

residual

hydrogen

Hydrogen

Oxygen → **Fuel cell** → water

Recover device

Electric Energy

## Description of the process

Catalytic reforming

Ethanol reforming is obtained by conducting a vapour phase mixture of ethanol, water and air, through a catalytic layer at temperature higher that 100 °C, with contact time longer than 100 ms. The reaction proceedes as follows:

$$C_2H_5OH + 2 H_2O + ½ O_2 \rightarrow 2 CO_2 + 5H_2 + 50 \text{ KJ/mole}$$

Ethanol 94-100% w/w in water is stored in a tank at environmental temperature. The ethanol is then diluted with the water produced in the fuel cell (56 % by weight) and introduced in a pre-heater compartment by means of a dispensing pump and vaporised at 140 °C (i.e its boiling temperature at a pressure of 1.3 ATA). In steady state conditions, the energy required to heat and vaporise the mixture is partially obtained from the hot gases of the reforming reactor. The remaining energy is obtained by burning a small amount of the hydrogen produced (less than 8%). The vaporization process at start up will be performed using an electric pre-heater and auxiliary battery. The vaporised mixture will be injected in the reforming reactor, which consists in a metal or ceramic cylinder containing a catalyst of surface-activated small spheres. The reactor dimension will be calibrated to ensure the required catalyst-mixture contact time. In optimal conditions the advancing rate of the reforming process will attain 90-99%. The outlet gases from the catalyst include side-compounds, such as CO and $CH_4$.

These are cooled from a starting temperature of 700 °C within the pre-heater by transferring waste heat to the ethanol mixture before it is injected inside the reactor. The catalysts consist of Rh, Pt and Pd supported on ceria or magnesium oxide.

Hydrogen purification

PEFC-type fuel cells with polymeric membrane are particularly adapted to electrical production in that they have a high reliability in the 5-250 KW power range, short initialisation time and tolerance to carbon dioxide. One drawback of PEFC-type fuel cells in the present application is a low tolerance to carbon monoxide.

As the reforming gases contain small amounts of CO, a purification stage has been added before the gas mixture is introduced into the fuel cell. The injection of virtually pure hydrogen inside the fuel cell will also increase its specific performance. Hydrogen separation from other gases is achieved by passing the reforming gas mixture inside a cylindrical container, whose external wall is made by a Pd-Ag membrane with stainless steel support, inserted within the metal cylinder.

The Pd-Ag membrane has a selective hydrogen permeation and creates a flux of pure hydrogen toward the fuel cell. The remaining gases are forced throughout the entire cylinder length and are collected in a burning device, to recover the heat necessary for the full vaporisation of the gas mixture entering the reforming chamber. Purification tubes of this type are already available at pre-industrial level.

The number and size of the hydrogen purification cylinder is a function of the inlet flux required by the fuel cell which depends on the electric power production requirements.

The hydrogen flux through the selectively permeable membrane can be calculated by using the following relationship:

$$F_{H2} = PE(T) * (P^n_{H2\ ex} - P^n_{H2\ per})$$

where:

$F_{H2}$ is the hydrogen specific flux through the membrane PE(T) is the membrane permeability coefficient as a function of temperature $P^n_{H2\ ex} - P^n_{H2\ per}$ are the exhausted and permeated hydrogen partial pressure n is a parameter which ranges from 0.5 and 1 and depends on flux limiting factors.

The gas contained in the internal cylinder will be maintained in slightly over-pressure conditions, while the space between the two cylinders will be under vacuum. This reduces the requred size of the purification tube. Considering that the exhausted gas mixture will contain about 8% of the hydrogen produced in the reforming chamber, the requirement to have hydrogen at the exit of the purification tube does not represent a loss in the yield of the whole process. The optimal temperature at which gases will enter the purification tube depends on the membrane permeability coefficient. Lower membrane permeabilities will lead to a higher thermal recovery in the pre-heater and, thus, less hydrogen needs to be diverted from electric energy production to the vaporisation of the ethanol mixture in the reforming chamber. A schematic drawing of the separation tube is enclosed to the present report.

Electric energy production

The electric power will be produced by using a PEFC (Polymer Electrolyte Fuel Cell), also termed PEM (Proton Exchange Membrane), device. This kind of fuel cells have demonstrated a high reliability for systems up to 250KW. These type of cell are based on the following electrochemical reactions:

ANODE: $2\ H_2 \rightarrow 4\ H^+ + 4\ e^-$

CATHODE: $4\ e^- + 4\ H^+ + O_2 \rightarrow 2\ H_2O$

$$\text{OVERALL: } 2\,H_2 + O_2 \rightarrow 2\,H_2O$$

At the anode, molecular hydrogen yields electrons in the presence of Pt as a catalyst. Electrons travel through an external circuit toward the cathode, thus producing an electrical current.

The polymeric membrane allows the hydrogen ions (protons) to cross and proceed toward the cathode. On the contrary electrons are prevented from following the same path, and they are forced to reach the cathode through an external circuit. At the cathode, the hydrogen ions combine with electrons and form water. The latest PEFC devices have an electric efficiency between 40% and 60%. By assuming an average value of 50%, and considering that hydrogen energetic content is 33000 Wh/Kg, a net power of 144 W is obtained from the 5 hydrogen moles supply by the reforming process.

The water obtained in the fuel cell (5 moles per each mole of ethanol) will be partially used in the reforming reaction (2 moles) and partially stored on board, to be returned to the ethanol supplier.

## Conclusions

The present study can be concluded by resuming the main characteristics of the process described:

1- the production of electric (and/or mechanical) power is immediately attainable at the level of a demonstration prototype, since the specific devices required (reforming reactor, membrane separation tubes and PE fuel cells) are already available on the market.

2- The proposed process contributes to solving (efficiently and with high yields) the problems that limit the development of electric vehicles.

3- The proposed process makes use of a raw material (ethanol), which is commonly obtained from totally renewable sources (cereals, sugar cane, molasses etc) and, in the future, from poor biomasses (wood and cellulose wastes).

4- The starting fuel is already available at prices comparable with those of other hydrocarbon-derived fuels and easily distributed.

5- The electric power obtained with this process does not produce $CO_2$ nor generate additional polluting agents.

## Claims

1.   Synergetic use of the three phases reported in the patent description (catalytic reforming, hydrogen purification, fuel cell supply) which, combined together in a mobile unit, may constitute the fundamental component for propulsion.

2.   A new model for a motor able to produce electric energy, formed by three coupled and integrated elements (catalytic reforming, hydrogen purification and fuel cell supply), fed by ethanol.

3.   A new model for a motor, able to produce electric energy, which also provides for its transformation into mechanic energy, formed by three coupled and integrated elements (catalytic reforming, hydrogen purification and fuel cell supply), fed by ethanol.

4.   A new model for a motor, able to produce electric energy, formed by three coupled and integrated elements (catalytic reforming, hydrogen purification and fuel cell supply), fed by alcohols.

5.   A new model for a motor, able to produce electric energy, which also provides for its transformation into mechanic energy, formed by three coupled and integrated elements (catalytic reforming, hydrogen purification and fuel cell supply), fed by alcohols.

6.   A new model for a motor, able to produce electric energy, formed by three coupled and integrated elements (catalytic reforming, hydrogen purification and fuel cell supply), fed by liquid fuels.

7.   A new model for a motor, able to produce electric energy, which also provides for its transformation into mechanic energy, formed by three coupled and integrated elements (catalytic reforming, hydrogen purification and fuel cell supply), fed by liquid fuels.

**8.** A new model for a motor, able to produce electric energy, formed by three coupled and integrated elements (catalytic reforming, hydrogen purification and fuel cell supply), fed by gaseous fuels.

**9.** A new model for a motor, able to produce electric energy, which also provides for its transformation into mechanic energy, formed by three coupled and integrated elements (catalytic reforming, hydrogen purification and fuel cell supply), fed by gaseous fuels.

**10.** A new model for a motor, able to produce electric energy starting from ethanol, other alcohols or gaseous and liquid fuels, which can be used for household purposes or on board of automobile vehicles, spatial vehicles, ground and marine vehicles in general, as well as for the fuelling of the above listed devices.

**European Patent Office**

## EUROPEAN SEARCH REPORT

Application Number

EP 06 42 5015

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/084726 A1 (DICKMAN ANTHONY J [US] ET AL) 21 April 2005 (2005-04-21) * paragraphs [0030] - [0032], [0074] - [0076] * | 1-10 | INV. B60L11/18 H01M8/06 |
| X | WO 03/072493 A1 (VOLVO TECHNOLOGY CORP [SE]; PETERSSON MARTIN [SE]; ANDERSSON BENGT [SE] 4 September 2003 (2003-09-04) * page 1, lines 8-13 * * page 6, lines 10-15 * | 1-10 | |

TECHNICAL FIELDS SEARCHED (IPC)

B60L
H01M

The present search report has been drawn up for all claims

| Place of search | Date of completion of the search | Examiner |
|---|---|---|
| Munich | 12 January 2007 | Jacquinot, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 06 42 5015

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2007

| Patent document cited in search report | | Publication date | Patent family member(s) | | Publication date |
|---|---|---|---|---|---|
| US 2005084726 | A1 | 21-04-2005 | AU | 4951301 A | 08-10-2001 |
| | | | BR | 0109569 A | 18-02-2003 |
| | | | CA | 2392881 A1 | 04-10-2001 |
| | | | EP | 1273061 A1 | 08-01-2003 |
| | | | JP | 2003529196 T | 30-09-2003 |
| | | | MX | PA02009375 A | 12-02-2003 |
| | | | WO | 0173879 A1 | 04-10-2001 |
| | | | US | 2001049038 A1 | 06-12-2001 |
| WO 03072493 | A1 | 04-09-2003 | AU | 2003217097 A1 | 09-09-2003 |
| | | | CA | 2476020 A1 | 04-09-2003 |
| | | | CN | 1639057 A | 13-07-2005 |
| | | | EP | 1480907 A1 | 01-12-2004 |
| | | | JP | 2005519012 T | 30-06-2005 |
| | | | SE | 523260 C2 | 06-04-2004 |
| | | | SE | 0200589 A | 28-08-2003 |
| | | | US | 2005000161 A1 | 06-01-2005 |

EPO FORM P0459

For more details about this annex : see Official Journal of the European Patent Office, No. 12/82